**Europäisches Patentamt**

**European Patent Office**

**Office européen des brevets**

(19)

(11) Numéro de publication: **0130888**
**B1**

(12) **FASCICULE DE BREVET EUROPEEN**

(45) Date de publication du fascicule du brevet:
**07.01.88**

(21) Numéro de dépôt: **84401297.1**

(22) Date de dépôt: **21.06.84**

(51) Int. Cl.⁴: **H 04 M 11/04**

ERRATUM

(SEITE, SPALTE, ZEILE)
(PAGE, COLUMN, LINE)
(PAGE, COLONNE, LIGNE)

| DIE TEXTSTELLE:<br>TEXT PUBLISHED:<br>LE PASSAGE SUIVANT: | | | | LAUTET BERICHTIGT:<br>SHOULD READ:<br>DEVRAIT ETRE LU: |
|---|---|---|---|---|
| 7. Installation according to one of Claims 1 to dicative of the ... | 12 | 21 | 01/02 | h) a memory adapted to record information indicative of the... |
| h) a memory adapted to record information in-3, characterized ... | 12 | 22 | 01/02 | 7. Installation according to one of Claims 1 to 3, characterized... |

| Tag der Entscheidung<br>über die Berichtigung<br>Date of decision on rectification:<br>Date de décision portant sur modification: | ) ) ) 11.04.87 ) ) | Ausgabe- und Ver-<br>öffentlichungstag:<br>Issue and publication date:<br>Date d'edition et de publication: | ) ) ) 15.06.88 ) ) | Patbl.Nr.)<br>EPB no:) 88/24<br>Bull. no:) |

# Europäisches Patentamt
# European Patent Office
# Office européen des brevets

(19)

(11) Numéro de publication: **0 130 888**
**B1**

(12)

# FASCICULE DE BREVET EUROPEEN

(45) Date de publication du fascicule du brevet:
**07.01.88**

(51) Int. Cl.⁴: **H 04 M 11/04**

(21) Numéro de dépôt: **84401297.1**

(22) Date de dépôt: **21.06.84**

(54) **Installation pour la transmission d'un signal d'alarme, par voie téléphonique, entre un poste émetteur, et un poste récepteur.**

(30) Priorité: **30.06.83 FR 8310888**

(43) Date de publication de la demande:
**09.01.85 Bulletin 85/2**

(45) Mention de la délivrance du brevet:
**07.01.88 Bulletin 88/1**

(84) Etats contractants désignés:
**BE DE GB IT LU NL**

(56) Documents cités:
**EP - A - 0 037 573**
**EP - A - 0 051 383**
**DE - A - 2 139 629**
**FR - A - 2 484 177**
**FR - A - 2 491 657**
**GB - A - 2 005 964**
**US - A - 3 868 479**
**US - A - 3 883 695**
**US - A - 4 016 360**

**ELECTRONIQUE APPLICATIONS, trimestriel no. 8,
1978/1979, pages 127-131, Paris, FR; P. GUEULLE:
"Transmetteur téléphonique d'alarmes"**

(73) Titulaire: **Black & Decker Inc., Drummond Plaza Office
Park 1423 Kirkwood Highway, Newark
Delaware 19711 (US)**

(72) Inventeur: **Metairie, Denis, Sous la Colletière,
F-69380 Chatillon d'Azergue (FR)**

(74) Mandataire: **Martin, Jean-Jacques et al, Cabinet
REGIMBEAU 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une installation pour la transmission d'un signal d'alarme, par voie téléphonique, entre un poste émetteur et un poste récepteur. Une telle installation est susceptible d'être utilisée à de nombreuses fins.

A titre d'exemple, on peut citer la signalisation d'effractions au niveau des dispositifs de fermeture d'un bâtiment ou autre, tels que portes, fenêtres, grilles, ou même de coffres ou analogues, la détection de fuites de gaz ou eau, ou encore, la détection d'incendies ou de dépassements de seuil de température ou autre, ou la transmission d'alarmes par des personnes âgées ou invalides.

De nombreuses installations d'alarme transmettant automatiquement, lors de la détection d'un événement nécessitant une alarme, un message en rapport avec l'événement provoquant l'alarme à un poste raccordé à un réseau téléphonique, ont déjà été proposées.

L'homme de l'art pourra par exemple se référer aux brevets français No 1 184 770, No 1 195 218, No 1 251 649, No 1 271 448 et No 1 304 451, qui décrivent tous de telles installations d'alarme utilisant le réseau téléphonique.

La demande de brevet européenne publiée sous le No 0 051 383 (SALT LAKE COMM.) concerne également un système d'alarme par voie téléphonique.

Le dispositif décrit dans ce document comprend:

– des moyens de détection et de mise en forme d'un signal délivré par des moyens d'alarme,
– une unité centrale sensible aux moyens de détection et de mise en forme et apte à commander,
– un relais de prise de ligne par l'intermédiaire
– d'un interface, lors de l'émission d'un signal par les moyens d'alarme,
– des moyens de détection de tonalité reliés à l'unité centrale et aptes à vérifier la tonalité, après bouclage de la ligne, par le relais de prise de ligne, ces moyens de détection de tonalité étant couplés à la ligne téléphonique par l'intermédiaire
– de moyens d'isolation galvanique,
– un relais de numérotation formé en fait du relais de prise de ligne apte à composer un numéro d'appel correspondant au poste récepteur, par rupture impulsionnelle de la ligne, et commandé par l'unité centrale par l'intermédiaire de l'interface,
– une mémoire adaptée pour enregistrer une information représentative du numéro d'appel du poste récepteur, et
– un clavier permettant d'introduire dans la mémoire l'information représentative du numéro d'appel,
– des moyens d'affichage visualisant le numéro d'appel introduit dans la mémoire, pour vérification,
– des moyens d'émission commandés par l'unité centrale et couplés à la ligne téléphonique par l'intermédiaire des moyens d'isolation galvanique adaptés pour émettre en direction du poste récepteur un signal représentatif d'une alarme,
– des moyens de détection de sonnerie couplés à la ligne téléphonique et adaptés pour détecter un appel du poste émetteur, provenant de l'extérieur,
– des moyens de temporisation adaptés pour réitérer un processus de numérotation d'un poste appelé dans le cas où celui-ci n'a pas répondu à un appel d'alarme précédent, c'est-à-dire si le combiné du poste appelé n'a pas été décroché.

Ce dispositif, qui est d'ailleurs de structure fort complexe, ne permet pas de vérifier que le poste appelé a bien identifié d'une part, le message d'alarme, d'autre part l'identité du poste appelant.

Le document GB-A 2 005 964 décrit une autre installation pour la transmission d'un signal d'alarme par voie téléphonique, qui est adapté pour réitérer l'appel d'un poste récepteur et l'envoi du signal d'alarme, tant que le poste émetteur n'a pas détecté un signal d'appel extérieur dans un délai déterminé consécutif à l'envoi précédent du signal d'alarme. Un tel dispositif ne donne cependant pas entière satisfaction, dans la mesure où un appel arrivant d'un autre poste sur le poste émetteur, dans le délai déterminé, peut acquitter l'alarme à tort.

Dans la pratique, on a constaté que les installations d'alarme jusqu'ici disponibles, étaient adaptées pour répondre à des applications très particulières.

La présente invention vient maintenant proposer une installation pour la transmission d'un signal d'alarme, par voie téléphonique, entre un poste émetteur et un poste récepteur, qui soit susceptible de nombreuses adaptations, tant en ce qui concerne le choix du poste récepteur auquel est transmise l'alarme, qu'en ce qui concerne la nature de l'évènement provoquant l'alarme, et qu'il convient de signaler.

Un autre but de la présente invention est de proposer une installation pour la transmission d'un signal d'alarme, qui soit susceptible de diverses options. Une telle proposition répond en particulier à un besoin actuel ressenti sur le marché, offrant la possibilité à l'utilisateur de personnaliser l'installation.

Un autre but de la présente invention est de proposer une installation pour la transmission d'un signal d'alarme qui puisse être aisément contrôlée par un utilisateur moyen n'ayant pas de connaissances particulières dans le domaine de l'électronique. En particulier, la présente invention propose une installation permettant à tout utilisateur, de modifier à volonté les coordonnées du poste récepteur auquel l'alarme doit être transmise, sans qu'il soit nécessaire de faire appel à un spécialiste extérieur.

Un autre but de la présente invention est de proposer une installation pour la transmission d'un signal d'alarme adapté pour fonctionner de façon entièrement automatique, sans le moindre contrôle d'un utilisateur.

Enfin, la présente invention a également pour objet de proposer une installation pour la transmission d'un signal d'alarme qui soit à la fois d'emploi simple, parfaitement fiable et économique.

Pour ce faire, la présente invention propose une installation pour la transmission d'un signal d'alarme, par voie téléphonique, entre un poste émetteur et un poste récepteur, qui comprend au niveau du poste émetteur:

a) des moyens de détection et de mise en forme d'un signal délivré par des moyens d'alarme,

b) une unité centrale sensible aux moyens de détection et de mise en forme et apte à commander,

c) un relais de prise de lignes par l'intermédiaire,

d) d'un interface, lors de l'émission d'un signal par les moyens d'alarme,

e) des moyens de détection de tonalité reliés à l'unité centrale et aptes à vérifier la tonalité après bouclage de la ligne par le relais de prise de ligne, ces moyens de détection de tonalité étant couplés à la ligne téléphonique par l'intermédiaire

f) de moyens d'isolation galvanique,

g) un relais de numérotation apte à composer un numéro d'appel correspondant au poste récepteur, par rupture impulsionnelle de la ligne, et commandé par l'unité centrale,

h) une mémoire adaptée pour enregistrer une information représentative du numéro d'appel du poste récepteur, et

i) un clavier permettant d'introduire dans la mémoire l'information représentative du numéro d'appel, ainsi que,

j) des moyens d'affichage visualisant le numéro d'appel introduit dans la mémoire, pour vérification,

k) des moyens d'émission commandés par l'unité centrale et couplés à la ligne téléphonique par l'intermédiaire des moyens d'isolation galvanique, adaptés pour émettre en direction du poste récepteur un signal représentatif d'une alarme,

l) des moyens de détection de sonnerie couplés à la ligne téléphonique et adaptés pour détecter un appel du poste émetteur de l'extérieur, caractérisée par le fait que:

– l'interface est formé d'un premier moyen amplificateur de courant,

– le relais de numérotation est commandé par l'unité centrale par l'intermédiaire d'un second moyen amplificateur de courant

– des seconds moyens d'isolation galvanique relient les moyens de détection de sonnerie à l'unité centrale et par le fait qu'elle comprend de plus:

m) des moyens de temporisation adaptés pour commander l'envoi d'une nouvelle émission du signal représentatif d'une alarme, si le poste émetteur n'a pas été rappelé une pluralité de fois, de l'extérieur, dans un délai déterminé suivant l'émission du signal antérieur représentatif d'une alarme.

On notera en particulier que la structure précitée de l'installation conforme à la présente invention permet de vérifier automatiquement que le poste appelé a identifié d'une part le poste appelant, et d'autre part la nature du message d'alarme. C'est là une caractéristique importante de la présente invention par rapport aux dispositifs antérieurs illustrés par exemple par la demande EP-A 0 051 383 précitée.

Selon une caractéristique avantageuse de la présente invention, les premiers moyens d'émission galvanique comprennent un transformateur.

Selon une autre caractéristique avantageuse, les seconds moyens d'isolation galvanique comprennent un photocoupleur à semi-conducteurs.

Selon une première variante de réalisation, les moyens d'émission comprennent au moins un générateur d'un signal de fréquence fixe comprise dans la bande passante des voies téléphoniques.

Selon une autre variante de réalisation, les moyens d'émission comprennent des moyens d'enregistrement et de lecture d'un message vocal.

Selon une troisième variante de réalisation, les moyens d'émission comprennent des moyens générateurs d'un message vocal par synthèse de paroles.

De préférence, la mémoire est adaptée pour enregistrer les informations représentatives de plusieurs numéros d'appels de postes récepteurs, et l'unité centrale est adaptée pour appeler successivement ces numéros jusqu'à ce que les moyens de temporisation détectent un appel du poste émetteur, de l'extérieur, dans ledit délai déterminé.

Une telle caractéristique permet en particulier de suppléer à la défaillance de l'un des postes récepteurs.

Selon une autre caractéristique avantageuse de la présente invention, le relais de prise de lignes est adapté pour coupler aux voies téléphoniques, en fonction de son état, soit un poste téléphonique local, soit le poste émetteur d'alarme, et ce dernier comporte également des moyens d'actionnement aptes à commander le relais de numérotation pour composer le numéro d'appel d'un poste récepteur et coupler ultérieurement le poste récepteur et le poste local, sans émettre de signal représentatif de l'alarme.

Dans un tel cas, l'installation conforme à la présente invention est utilisée en tant que dispositif pour la composition automatique de numéros d'appel téléphonique.

Selon une autre caractéristique avantageuse de la présente invention, permettant en particulier de rendre cette installation très économique sur le plan de la consommation d'énergie, le poste émetteur d'alarme comprend en outre une porte OU possédant trois entrées reliées respectivement au clavier, aux moyens de détection et de mise en forme et aux moyens de détection de sonnerie, la sortie de la porte OU étant connectée à une entrée de réactivation de l'unité centrale, normalement au repos.

Selon une autre caractéristique avantageuse de la présente invention, permettant en particulier de rendre l'installation entièrement automatique, le poste récepteur comprend des moyens aptes à composer automatiquement un numéro d'appel correspondant au poste émetteur d'alarme et à émettre un signal d'acquit représentatif de la prise en compte d'un signal d'alarme.

Selon une autre caractéristique préférentielle de la présente invention, le poste récepteur comprend en outre des moyens générateurs de signaux, aptes à actionner des moyens de commutation prévus au niveau du poste émetteur, pour assurer la mise sous tension ou hors tension de ce dernier.

D'autres caractéristiques et avantages de la présente invention apparaîtront à la lecture de la description détaillée qui va suivre, et en regard des dessins annexés sur lesquels:

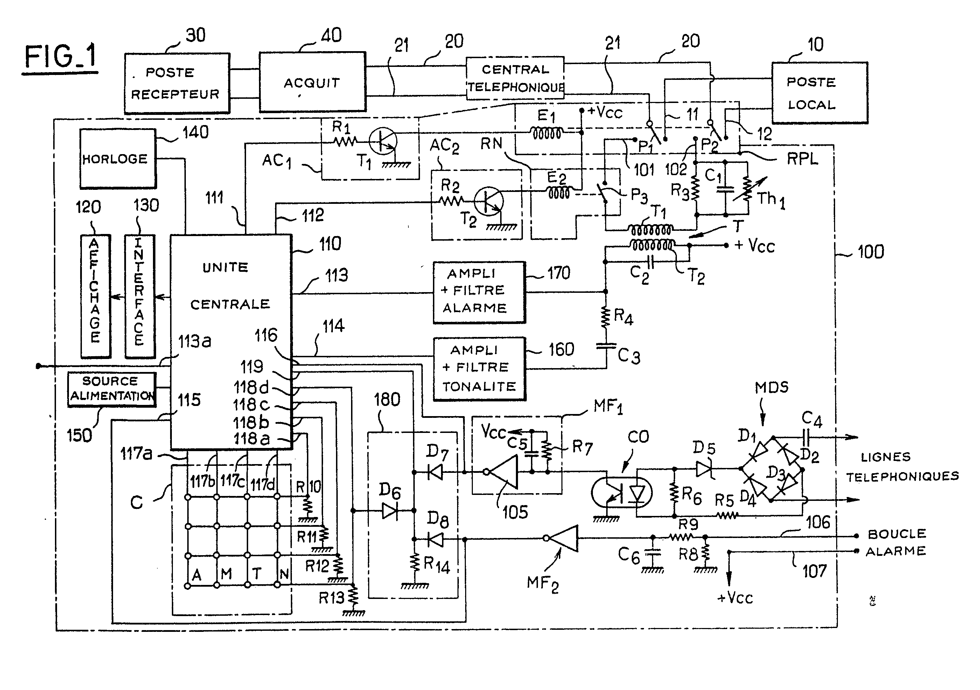

– la figure 1 représente une vue schématique d'une installation conforme à la présente invention,

– les figures 2 et 3 représentent des organigrammes simplifiés de fonctionnement de cette installation selon deux variantes correspondant respectivement à des possibilités d'appel d'un ou deux postes récepteurs.

Dans un premier temps, on va décrire de façon succincte, la structure du poste émetteur.

Celui-ci est schématiquement représenté dans l'encadré en traits interrompus, référencé 100.

Un relais de prise de lignes représenté dans l'encadré en traits interrompus référencé RPL permet d'isoler un poste téléphonique local 10 et de relier prioritairement les lignes téléphoniques schématiquement représentées en 20, 21 au circuit du poste émetteur 100.

Le relais de prise de lignes RPL est commandé par une unité centrale 110 par l'intermédiaire d'un amplificateur de courant représenté dans l'encadré en traits interrompus référencé $AC_1$.

De façon similaire, un relais de numérotation représenté dans l'encadré en traits interrompus référencé RN, est contrôlé par l'unité centrale 110 par l'intermédiaire d'un amplificateur de courant représenté dans l'encadré en traits interrompus référencé $AC_2$.

De façon classique en soi, le relais de numérotation RN est adapté pour composer un numéro d'appel correspondant au poste récepteur 30 destiné à recevoir le signal d'alarme, par rupture impulsionnelle de la ligne.

Un clavier schématiquement représenté dans l'encadré en traits interrompus référencé C, est relié à l'unité centrale 110. Ce clavier C est adapté pour introduire dans une mémoire de l'unité centrale, l'information représentative du numéro d'appel du poste récepteur 30.

Là encore, de façon classique en soi, ces informations mémorisées, et destinées à être ultérieurement appliquées à l'amplificateur de courant $AC_2$ et au relais de numérotation RN, sont adaptées pour commander une ouverture et une fermeture de la ligne téléphonique, à un rythme prédéterminé, correspondant au numéro d'appel du poste récepteur 30 choisi.

Les différents postes du réseau 30 et 100 sont interconnectés grâce aux lignes 20, 21, par l'intermédiaire d'un central téléphonique, de façon classique en soi.

De préférence, ces informations introduites par l'intermédiaire du clavier C sont mémorisées dans une mémoire vive ou à accès direct (RAM).

Un dispositif d'affichage 120 relié à l'unité centrale 110 par l'intermédiaire d'un circuit d'interface 130, permet de visualiser le numéro d'appel introduit dans la mémoire par l'intermédiaire du clavier C, pour vérification.

Une telle disposition s'avère particulièrement utile dans la pratique, lorsque l'installation est utilisée par un non spécialiste.

Une horloge 140 et une source d'alimentation 150 sont également associées à l'unité centrale 110.

Des moyens de détection de tonalité 160 et des moyens 170 d'émission d'un signal représentatif d'une alarme, sont couplés aux lignes téléphoniques 20, 21 par l'intermédiaire d'un transformateur T jouant le rôle de moyen d'isolation galvanique.

D'autre part, la sortie des moyens de détection de tonalité 160 et l'entrée des moyens d'émission d'un signal d'alarme 170, sont reliées à l'unité centrale 110.

Les moyens 160 de détection de tonalité sont adaptés pour vérifier la tonalité de la ligne 20, 21 après bouclage de celle-ci par le relais de prise de lignes RPL.

Des moyens de détection de sonnerie référencés MDS, sont couplés aux lignes téléphoniques 20, 21 et reliés à l'unité centrale par l'intermédiaire d'un photocoupleur à semi-conducteurs référencé CO et d'un circuit de mise en forme représenté à l'intérieur de l'encadré en traits interrompus référencé $MF_1$.

De façon similaire au transformateur T précité, le photocoupleur CO a pour but de réaliser une isolation galvanique entre les lignes téléphoniques 20, 21 et l'unité centrale 110.

Les moyens de détection d'alarme, proprement dits, qui seront décrits plus en détail par la suite, sont reliés à l'unité centrale 110 par l'intermédiaire de moyens de mise en forme référencés $MF_2$.

De préférence, afin de limiter la consommation d'énergie du système, l'unité centrale 110 est mise au repos par des moyens de temporisation, lorsqu'au bout d'un temps déterminé, aucune intervention n'est demandée à l'unité centrale.

Une porte OU 180 à trois entrées, permet de réactiver l'unité centrale 110. Les trois entrées de cette porte 180 sont reliées respectivement au clavier C, aux moyens détecteurs de détection et de mise en forme $MF_2$ sensibles au dispositif générateur d'alarme, ainsi qu'aux moyens de détection de sonnerie MDS.

Enfin, l'unité centrale 110 comprend des moyens de temporisation (non représentés sur la figure car intégrés à l'unité centrale) pour réitérer le processus d'envoi d'une émission du signal représentatif de l'alarme, si le poste émetteur 100 n'a pas été rappelé, de l'extérieur, par le poste récepteur 30, dans un délai déterminé suivant l'émission du signal antérieur représentatif d'une alarme.

De préférence, le poste récepteur 30 comprend des moyens schématiquement représentés sous forme de bloc fonctionnel 40 portant la dénomination ACQUIT, adaptés pour composer automatiquement un numéro d'appel correspondant au poste émetteur 100 d'alarme, et à émettre un signal d'acquit représentatif de la prise en compte du signal d'alarme émis par celui-ci.

On va maintenant décrire de façon plus précise, la structure des différents éléments utilisés dans l'installation conforme à la présente invention représentés sur la figure annexée.

Les amplificateurs de courant AC$_1$ et AC$_2$ précités comprennent des transistors T1 et T2 respectifs, de type NPN. Les bases des transistors T1 et T2 sont reliées aux sorties correspondantes 111 et 112 de l'unité cedntrale 110 par l'intermédiaire de résistances R1 et R2, limitatrices de courant.

Les émetteurs des transistors T1 et T2 sont reliés à la masse, tandis que les collecteurs des transistors T1 et T2 sont reliés respectivement à une première borne des enroulements E1 et E2 du relais de prise de lignes RPL et du relais de numérotation RN. Les secondes bornes des enroulements E1 et E2 sont reliées en commun à une borne positive de l'alimentation électrique schématiquement référencée + V$_{cc}$.

L'enroulement E$_1$ commande l'état du relais de prise de lignes RPL. Plus précisément, l'enroulement E$_1$, selon qu'il est ou non alimenté par l'amplificateur de courant AC$_1$, assure le basculement de palettes P$_1$ et P$_2$ d'interrupteur reliées respectivement aux lignes téléphoniques 20 et 21. Dans une première position, les palettes d'interrupteur P$_1$ et P$_2$ assurent une liaison entre les lignes téléphoniques 20, 21 et les lignes 11 et 12 d'accès au réseau, connectées au poste local. Dans cette position, une communication est autorisée entre le poste local 10 et les divers postes récepteurs connectés au réseau téléphonique 20, 21.

Dans une seconde position commandée par l'enroulement E$_1$, les palettes P$_1$ et P$_2$ assurent une liaison entre le réseau téléphonique 20, 21 et les entrées 101, 102 d'accès au réseau téléphonique du poste émetteur 100.

Ces entrées d'accès au réseau 101 et 102 sont reliées entre elles par l'intermédiaire d'une palette P$_3$ du relais de numérotation RN, d'un premier enroulement T$_1$ du transformateur T, et d'une résistance R$_3$, tous ces éléments étant connectés en série.

En parallèle de la résistance R$_3$, on trouve un condensateur C$_1$ et une thermistance TH$_1$, assurant une régulation automatique du courant de bouclage. Les impédances des éléments R$_3$, C$_1$ et TH$_1$ sont déterminées pour limiter le courant de bouclage à une valeur maximum de 50 mA environ.

Le second enroulement T$_2$ du transformateur possède une première borne reliée à une borne de tension positive d'alimentation électrique référencée schématiquement + V$_c$, et une seconde borne reliées à la sortie des moyens 170 d'émission d'un signal d'alarme, portant sur la figure annexée, la mention «AMPLI + FILTRE ALARME».

Un condensateur C$_2$ est connecté en parallèle du second enroulement T$_2$ du transformateur.

Le cas échéant, des diodes de protection peuvent être prévues en parallèle des enroulement E$_1$ et E$_2$. Il peut en être de même en parallèle du premier enroulement T$_1$ du transformateur.

Le transformateur T est de préférence calculé pour définir un rapport de 1, et isoler les lignes téléphoniques 20, 21 du reste du circuit du poste émetteur 100.

Le circuit 170 est adapté pour émettre sur les lignes téléphoniques 20, 21 par l'intermédiaire du transformateur T, un signal d'alarme.

Selon une première variante de réalisation, le circuit 170 comprend au moins un générateur d'un signal de fréquence fixe comprise dans la bande passante des voies téléphoniques.

Dans un tel cas, le circuit 170 comprend un étage amplificateur ainsi qu'un filtre d'harmoniques, du type transistorisé ou à amplificateur opérationnel.

Selon une seconde variante de réalisation, le circuit 170 comprend des moyens d'enregistrement et de lecture d'un message vocal. On peut également prévoir de relier un dispositif d'enregistrement de message vocal à l'entrée du poste émetteur 100 qui est est connectée à la liaison référencée 113a conduisant à l'unité centrale.

Selon une troisième variante de réalisation, le circuit 170 comprend des moyens générateurs d'un message vocal par synthèse de paroles.

Selon une autre option, on peut envisager de modifier la nature exacte du message vocal généré par le circuit de synthèse, par action sur le clavier. L'utilisateur a ainsi la possibilité de composer et définir le message et le code en clair généré par le circuit de synthèse, pour le personnaliser. Une telle disposition est intéressante en particulier dans le cas ou plusieurs postes émetteurs sont susceptibles d'appeler un même correspondant.

Des circuits générateurs de signal d'alarme, susceptibles d'être utilisés dans le cadre de la présente invention sont bien connus de l'homme de l'art, qui pourra s'inspirer de nombreuses réalisations antérieures. Pour ces raisons, la structure particulière du circuit 170 ne sera pas décrite par la suite.

En variante, on peut prévoir des moyens intégrés à l'unité centrale, pour générer le signal d'alarme. Celui-ci étant ultérieurement amplifié et filtré au niveau du circuit 170.

En variante, on peut également envisager de concevoir le signal d'alarme émis en sortie du circuit 170, sous forme d'un signal sonore modulé à deux fréquences caractéristiques.

D'autre part, afin de différencier plusieurs postes émetteurs 100 susceptibles d'appeler un même poste récepteur 30, on peut prévoir des tonalités différentes pour chacun des signaux émis par ces postes émetteurs 100.

Bien entendu, l'unité centrale comporte d'autre part une temporisation limitant la durée d'émission du signal d'alarme.

A titre d'exemple, on peut ainsi envisager d'émettre pendant environ 45 secondes, un signal sonore modulé à deux fréquences respectivement de 1600 et 1270 Hz.

On peut également envisager de coupler le circuit 170 émetteur d'un signal d'alarme, à un dispositif d'enregistrement et de lecture d'un message vocal. Ainsi, le poste émetteur 100 peut être relié à un dispositif du type magnétophone à cassettes avec télécommande permettant d'envoyer un message enregistré en clair au poste récepteur 30.

La sortie de l'unité centrale raccordée à l'entrée du circuit 170 est référencée 113 sur la figure annexée.

L'entrée du circuit 160 de détection de tonalité est reliée également au second enroulement $T_2$ du transformateur T par l'intermédiaire d'une cellule série comprenant une résistance $R_4$ et un condensateur $C_3$.

La sortie de ce circuit 160 est reliée à l'entrée 114 de l'unité centrale.

La structure particulière du circuit de détection de tonalité 160 composée essentiellement d'un filtre et d'un amplificateur, ne sera pas décrite en détail. La structure d'un tel circuit est bien connue de l'homme de l'art.

La sensibilité de la détection de tonalité sera de préférence de l'ordre de –40 dB, pour une fréquence de 440 Hz.

D'autre part, l'unité centrale 110 comporte des moyens de temporisation permettant d'une part, après reconnaissance de la tonalité au décroché obtenu par fermeture de la boucle grâce au relais de prise de lignes RPL d'attendre éventuellement une tonalité intermédiaire, d'autre part, de réinitialiser le processus d'appel, dans le cas où après un délai prédéterminé, par exemple de 10 secondes, la tonalité au décroché n'est pas obtenue.

De préférence, la source d'alimentation 150 du poste émetteur 100 est une source d'alimentation autonome.

A titre d'exemple, cette source d'alimentation peut être formée de piles électriques, ou de batteries rechargeables.

Le circuit de détection de sonnerie référencé MDS comprend un circuit de redressement connecté aux lignes téléphoniques 20, 21 par l'intermédiaire d'un condensateur $C_4$. Plus précisément, le circuit de redressement comprend quatre diodes $D_1$, $D_2$, $D_3$ et $D_4$ montées en pont de Graetz.

Plus précisément, une première ligne téléphonique est reliée à l'anode de la diode $D_1$ et à la cathode de la diode $D_2$, tandis que la seconde ligne est reliée à l'anode de la diode $D_4$ et à la cathode de la diode $D_3$.

La sortie négative correspondant au point commun aux anodes des diodes $D_2$ et $D_3$ est reliée à la cathode de la diode émettrice du photocoupleur CO par l'intermédiaire d'une résistance limitatrice de courant $R_5$. L'anode de la diode émettrice du photocoupleur CO est elle-même raccordée à la sortie positive du circuit de redressement, correspondant au point commun aux cathodes des diodes $D_1$ et $D_4$ par l'intermédiaire d'une diode Zener $D_5$. Cette dernière possède son anode reliée à l'anode de la diode émettrice, et sa cathode reliée à la sortie positive du circuit de redressement.

Enfin, une résistance R6 est connectée en parallèle de la diode émettrice du photocoupleur CO.

Tel que cela a été précédemment indiqué, le photocoupleur CO permet d'obtenir une isolation galvanique entre les lignes téléphoniques du réseau, et les circuits du poste émetteur 100.

L'émetteur du photocoupleur CO est relié à la masse et le collecteur de celui-ci attaque l'entrée d'une porte 105 de mise en forme.

L'entrée de cette porte 105 est également reliée à une borne d'alimentation positive référencée $+V_{cc}$ par l'intermédiaire d'une cellule parallèle comprenant une résistance $R_7$ et un condensateur $C_5$.

La sortie de la porte 105 qui génère un signal représentatif d'un appel provenant de l'extérieur est reliée à l'entrée 116 de l'unité centrale.

Cette entrée 116 est validée, lors de la réception d'un acquit provenant du poste récepteur 30, tel que cela sera décrit plus en détail par la suite.

Selon le mode de réalisation particulier représenté sur la figure annexée, le dispositif détectant l'événement provoquant l'alarme, se compose d'un boucle raccordée aux bornes d'entrée 106 et 107 du poste émetteur 100.

L'état fermé de la boucle raccordée aux entrées 106 et 107 indique qu'aucun événement d'alarme n'est relevé.

A l'inverse, l'ouverture de la boucle connectée aux entrées 106 et 107 indique la détection d'un événement devant provoquer l'alarme.

La borne 107 est raccordée, tel que cela est schématiquement représenté, à une borne positive $+V_{cc}$ d'alimentation électrique.

L'entrée 106 est reliée d'une part à la masse par l'intermédiaire d'une résistance de polarisation $R_8$, d'autre part, à l'entrée d'une porte de mise en forme $MF_2$, par l'intermédiaire d'une résistance $R_9$ limitatrice de courant.

D'autre part, l'entrée de cette porte $MF_2$ est reliée à la masse par l'intermédiaire d'un condensateur $C_6$ jouant le rôle de filtre pour éliminer les parasites.

La sortie de la porte $MF_2$ délivrant un signal représentatif de l'apparition d'un événement devant donner lieu à l'émission d'une alarme est reliée à l'entrée 115 de l'unité centrale 110.

Bien entendu, le poste émetteur 100 est susceptible de coopérer avec des dispositifs de détection d'alarme utilisant un principe autre que celui de l'ouverture d'une boucle.

Pour cela, il suffit d'adapter les circuits d'interfaces et de mise en forme, reliant le dispositif d'alarme détectant par exemple une effraction d'un bâtiment, ou l'apparition d'un événement, à l'entrée 115 de l'unité centrale 110.

L'horloge 140 sera de préférence composée d'une base de temps comprenant un oscillateur de type RC, classique en soi, dont la résistance est accessible de l'extérieur et peut être ajustée.

En variante, l'horloge 140 à réseau RC pourra avantageusement être remplacée par un quartz ou un résonateur céramique assurant une bonne précision et stabilité de toutes les temporisations et fréquences générées par l'unité centrale.

Le clavier C permettant d'introduire le numéro du poste récepteur dans une mémoire de l'unité centrale 110 est un clavier du type téléphonique classique.

Ce clavier est directement branché en configuration XY sur quatre sorties/quatre entrées de l'unité centrale 110, qui analyse les niveaux logiques fournis par les contacts des touches.

En outre, le clavier se complète de quatre touches référencées A, M, T et N respectivement, et correspondant aux fonctions marche-arrêt-test-numérotation.

Las touche A remplissant la fonction arrêt a pour but de mettre le poste émetteur 100 au repos, et de rendre celui-ci insensible à ces entrées 106 et 107 d'alarme. Cependant, le ou les numéros du poste récepteur 30 sont conservés en mémoire. La touche arrêt A peut également être utilisée à tout moment d'une séquence de fonctionnement actif, par exemple pendant une numérotation, pour annuler ce fonctionnement et repasser le poste émetteur en position repos.

La touche M remplissant la fonction marche a pour but, à l'opposé de mettre le poste émetteur 100 en position de surveillance.

La touche N remplissant la fonction numérotation a pour but d'autoriser l'insertion, par le clavier, du numéro de téléphone d'appel, dans la mémoire de l'unité centrale 110.

En option, la modification du numéro en mémoire peut être assujettie à la composition préalable sur le clavier C, d'un numéro-code d'accès évitant à un utilisateur non habilité, ou par erreur, de modifier ce numéro.

Enfin, la touche T remplissant la fonction test, permet, après programmation d'un numéro de téléphone, et avant la mise en service, de vérifier le numéro programmée en activant le poste émetteur 100, qui effectue une numérotation, et passe aussitôt la communication qui s'établit sur le poste téléphonique local 10, sans transmission pour cela d'un signal d'alarme.

De préférence, on peut prévoir de mettre en mémoire dans l'unité centrale un nombre de numéros d'appel supérieur au nombre de numéros d'appel (par exemple 10). L'action sur la touche Test suivie du code repère de l'un de ces numéros fait automatiquement composer ce numéro et passe la communication.

De plus, l'utilisateur peut vérifier le numéro d'appel mis en mémoire, grâce aux circuits d'affichage 120.

A titre d'exemple, un tel circuit d'affichage 120 peut être du type à cristaux liquides.

Les colonnes du clavier C sont reliées aux entrées 117 A, 117B, 117C et 117D de l'unité centrale 110, tandis que les lignes du clavier sont reliées aux entrées 118A, 118B, 118C et 118D respectivement.

Les lignes du clavier sont d'autre part reliées à la masse par des résistances $R_{10}$, $R_{11}$, $R_{12}$ et $R_{13}$.

Enfin, pour économiser l'énergie consommée par l'installation, on prévoit des moyens qui arrêtent des fonctionnement du logiciel en l'absence d'intervention externe pendant un délai prédéterminé.

L'unité centrale 110 est activée, lorsque cela est nécessaire par la sortie d'une porte OU 180 précitée. La sortie de cette porte OU 180 est reliée à l'entrée 119 de l'unité centrale 110.

Plus précisément, cette porte OU 180 à trois entrées est formée de trois diodes $D_6$, $D_7$ et $D_8$ dont les cathodes sont reliées à la masse par l'intermédiaire d'une résistance $R_{14}$. Les ondes de ces trois diodes $D_6$, $D_7$ et $D_8$ sont reliées respectivement aux fonctions marche-arrêt-test-numérotation du clavier c, à la sortie des moyens de mise en forme $MF_1$ reliés aux moyens de détection de sonnerie MDS et aux moyens de mise en forme $MF_2$ détectant un signal délivré par les moyens d'alarme.

L'unité centrale 110 comporte d'autre part une mémoire, telle qu'une mémoire morte, destinée à stocker le programme du processus d'alarme.

En option, il est avantageux de prévoir une mémoire, dans l'unité centrale, adaptée pour enregistrer les informations représentatives de plusieurs numéros d'appel de poste récepteur 30, et d'adapter le programme du processus contrôlé par l'unité centrale de façon à appeler successivement ces numéros, jusqu'à ce que les moyens de temporisation précités détectent un appel du poste émetteur 100, provenant de l'extérieur, dans ledit délai déterminé, qui poura être chosi, par exemple de l'ordre de 3 mn.

En option également, et afin de garantir qu'un appel provenant de l'extérieur reçu dans ledit délai déterminé corresponde bien à un signal d'acquittement, et de prise en compte du signal d'alarme, on peut adapter les moyens de temporisation de l'unité centrale 110, pour commander l'envoi d'une nouvelle émission du signal représentatif de l'alarme, si le poste émetteur n'a pas été rappelé une pluralité de fois, par exemple deux fois, de l'extérieur, dans ledit délai déterminé suivant l'émission du signal antérieur représentatif d'une alarme. Ceci évite qu'un appel arrivant d'un autre poste juste à ce moment acquitte l'alarme à tort.

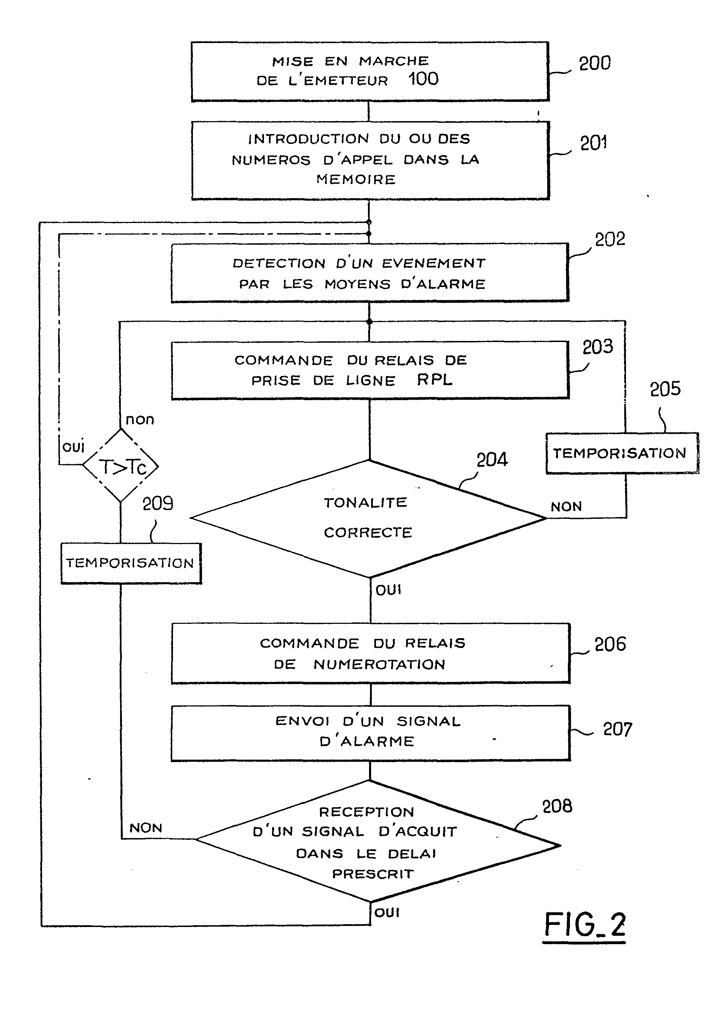

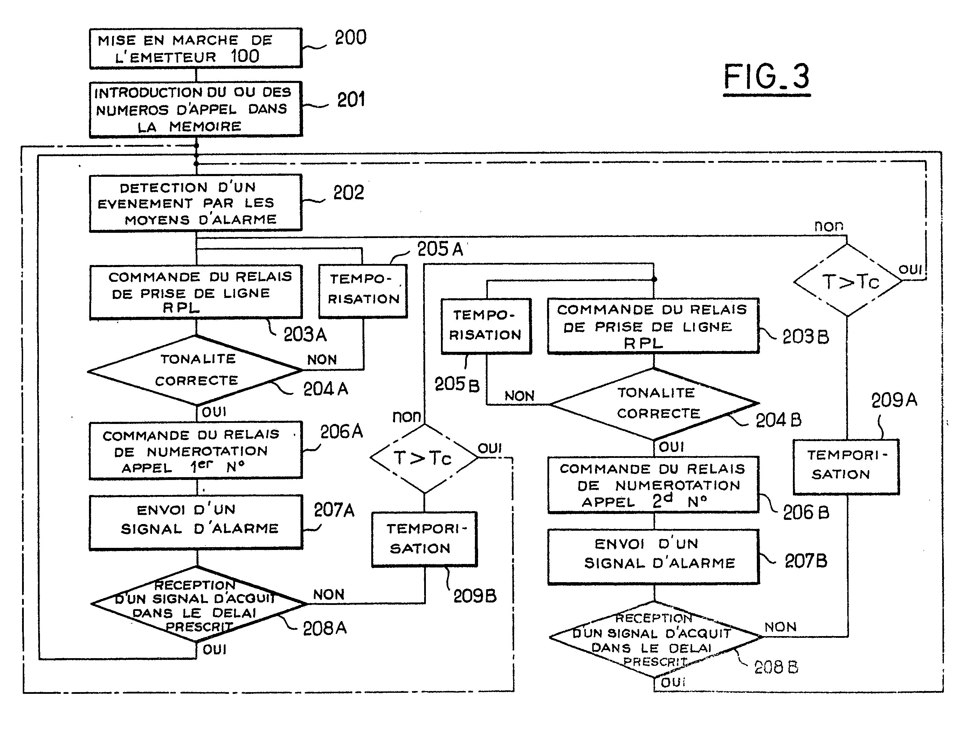

On va maintenant décrire le fonctionnement de l'installation conforme à la présente invention en regard des figures 2 et 3.

L'organigramme de la figure 2 correspond au fonctionnement d'une installation possédant un numéro d'appel en mémoire.

L'organigramme de la figure 3 correspond au fonctionnement d'une installation possédant deux numéros d'appel en mémoire.

La touche M remplissant la fonction marche étant actionnée, le poste émetteur est sensible à ses entrées 106 et 107 d'alarme (étape 200).

Avant la mise en service proprement dite du poste émetteur 100, et après raccordement au circuit d'alarme, par l'intermédiaire des entrées 106 et 107, l'utilisateur rentre en mémoire le ou les numéros de téléphone d'appel du ou des postes récepteurs 30 (étape 201). Pour cela, l'utilisateur utilise le clavier C après actionnement de la touche N de numérotation.

Lorsqu'un alarme se déclenche (étape 202), au niveau de ces entrées, que ce soit sous forme de la rupture de la boucle, selon le mode de réalisation représenté, ou sous la forme d'un tout autre signal codé, l'unité centrale entame le processus d'émission du signal d'alarme.

Dans un premier temps, le relais de prise de lignes RPL est actionné (étape 203), afin d'isoler le poste de téléphone local 10. De préférence, une temporisation de l'ordre de 6 secondes est prévue à cet effet.

La ligne est alors bouclée, ce qui correspond au décroché, et le circuit 160 contrôle la tonalité d'invitation à numéroter (étape 204).

Si la tonalité au décroché n'est pas obtenue, l'unité centrale réitère le processus de bouclage au bout de 10 secondes, et ainsi de suite, selon un programme préétabli. La temporisation schématisée à l'étape 205 correspond à un tel programme préétabli.

Lorsque la tonalité est obtenue, le relais de numérotation RN est activé (étape 206) pour effectuer la numérotation par rupture impulsionnelle de la boucle. Cette numérotation est alors suivie d'une temporisation de l'ordre d'une dizaine de secondes.

Le signal d'alarme généré par le circuit 170, en coopération avec l'unité centrale 110 est alors adressé au poste récepteur par l'intermédiaire du transformateur T pendant une durée de l'ordre de 45 secondes environ (étape 207).

L'unité centrale 110 porte alors le poste 100 en attente du rappel d'acquit provenant du poste récepteur 30 (étape 208).

Ce rappel d'acquit est attendu pendant un délai déterminé, par exemple de l'ordre de 3 mn, faute de quoi le poste émetteur 100 réitère une nouvelle tentative de transmission, reprenant les étapes précédemment indiquées.

En cas d'insuccès répété, le transmetteur réitèrera des tentatives à des intervalles de plus en plus espacés dans le temps, suivant une séquence définie schématisée par la temporisation correspondant à l'étape 209 sur la figure 2.

Tout rappel du poste émetteur 100, provenant du poste récepteur 30, qui intervient après le délai prédéterminé suivant l'émission du signal d'alarme par le circuit 170, n'est pas validé, et le processus d'émission est réitéré.

En cas d'insuccès répété, lorsque plusieurs numéros d'appel sont mémorisés dans l'unité centrale 100, on peut prévoir comme représenté sur la figure 3 d'appeler successivement chacun des postes récepteurs 30.

L'organigramme de la figure 3 est très proche de celui de la figure 2 et ne sera pas redécrit. Les étapes identiques sur ces deux figures portent les mêmes références numériques. En outre, les étapes correspondant à l'appel du premier numéro sont assorties de l'indice «A» tandis que les étapes correspondant à l'appel du deuxième numéro sont assorties de l'indice «B».

De préférence, les temporisations référencées 209 et 209A, 209B sur les figures 2 et 3 sont agencées de telle sorte que dans le cas de non-réception d'acquit après un délai long $T_c$ (par exemple 20 heures) le poste émetteur s'acquitte tout seul et repasse en veille.

Lorsqu'un rappel d'acquit est obtenu, le poste émetteur repasse à l'état de veille (avant étape 202), éventuellement après une temporisation non représentée sur les figures permettant d'annuler l'événement d'alarme.

D'autre part, il est avantageux que lors de la réception du rappel d'acquit provenant du circuit 40 et du poste récepteur 30, le poste émetteur, après décroché, envoie un signal de fréquence fixe hachée, de préférence différent du signal d'alarme à deux tons précédemment adressé, pour signaler à l'appelant, le poste récepteur 30, sa prise en compte de l'acquit.

Le poste récepteur 30 est ainsi avisé du fait que le poste émetteur 100 repasse en position surveillance.

Selon une autre option, il est avantageux de prévoir, au niveau du poste récepteur 30, des moyens générateurs de signaux aptes à actionner des moyens de commutation prévus au niveau du poste émetteur pour assurer la mise sous tension ou hors tension de ce dernier.

En d'autres termes, de tels moyens générateurs de signaux prévus au niveau du poste récepteur permettent d'assurer une télécommande basculant un contact du poste émetteur 100 pour assurer la mise en route ou l'arrêt de celui-ci à distance.

Bien entendu, la présente invention n'est pas limitée au mode de réalisation qui vient d'être décrit mais est susceptible de nombreuses variantes de réalisation.

En variante, on peut envisager que dans le cas où deux rappels d'acquit sont exigés pour arrêter l'envoi de signaux d'alarme, le poste émetteur lorsqu'il décroche envoie des trains de fréquence simple ou double respectivement pour indiquer clairement au correspondant s'il s'agit de son premier ou du deuxième rappel d'acquittement. Ce procédé peut bien entendu être utilisé pour un nombre quelconque de rappels.

En option, on peut prévoir que dans le cas où le poste émetteur a transmis un message d'alarme (et a été acquitté normalement) il repasse à l'état de veille, mais que dans ce cas, l'action sur la touche ARRET (lorsque le propriétaire rentre chez lui par exemple) fait afficher un signe de mémorisation d'alarme pour indiquer qu'il y a eu alarme pendant l'absence et simultanément qu'un émetteur sonore envoie un train de fréquences sonores pour attirer l'attention.

De plus, on peut avantageusement brancher sur la prise reliée à la liaison 113a, on a une liaison similaire, (les circuits de pré-amplification étant prévus sur le poste émetteur) un microphone de surveillance. Le poste émetteur 100 peut alors, lors de l'envoi du message d'alarme permettre également au correspondant (poste récepteur) d'écouter ce qui se passe dans le local surveillé pour avoir une meilleure information sur la cause éventuelle de l'alarme. Cette disposition peut être également utile pour effectuer une surveillance à distance (telle que d'une chambre d'enfant) en déclenchant l'écoute sur appel de l'extérieur.

Comme cela a été décrit précédemment le poste récepteur 30 comporte de préférence des moyens 40 aptes à composer automatiquement un numéro d'appel correspondant au poste 100 émetteur d'alarme.

Cet appel du poste 100 émetteur peut être utilisé pour l'envoi d'un signal d'acquit représentatif de la prise en compte du signal d'alarme, ou pour l'actionnement de moyens de commutation prévus au niveau du poste émetteur 100 pour assurer la mise sous tension ou hors tension de ce dernier.

Selon l'invention, on peut encore envisager de mémoriser dans l'unité centrale du poste émetteur 100 un code confidentiel qui, lorsqu'il est composé à partir d'un poste récepteur après appel du poste émetteur par ce dernier, autorise une modification, à partir dudit poste récepteur, d'un numéro d'appel de poste récepteur mémorisé au poste émetteur 100.

Un tel processus permet au possesseur du poste récepteur 30 de faire suivre les appels s'il se déplace, en programmant à chaque fois le nouveau numéro d'appel où il se trouve, tout en garantissant, grâce au code confidentiel qu'un tiers ne puisse effectuer de tels modification ou détournement de numéros d'appel.

La mise en œuvre du procédé de modification du numéro d'appel de poste récepteur mémorisé dans l'unité centrale 110 du poste 100 émetteur d'alarme, qui requiert l'envoi successif du poste récepteur 30 vers le poste émetteur 100, d'un signal de numérotation pour l'appel du poste émetteur, d'un signal représentatif du code confidentiel et d'un signal correspondant au nouveau numéro à mémoriser dans l'unité centrale peut être l'objet de nombreuses variantes.

En particulier, l'unité centrale peut être adaptée pour comparer le code confidentiel reçu du poste récepteur 30 au code confidentiel mémorisé préalablement et pour émettre en direction du poste récepteur 30 un signal de validation, en cas de coïncidence entre les deux codes confidentiels, autorisant alors l'émission par le poste récepteur du signal correspondant au nouveau numéro d'appel de poste récepteur à mémoriser.

De nombreux types de signaux pourront transiter entre le poste émetteur d'alarme 100 et le poste récepteur 30 pour synchroniser le dialogue entre ceux-ci et permettre en particulier la reconnaissance par le poste 100 émetteur d'alarme du nouveau numéro à mémoriser.

Bien entendu, on peut également envisager d'imposer la composition dudit code confidentiel pour toute modification d'un numéro d'appel par intervention sur le clavier C associé à l'unité centrale du poste 100 émetteur d'alarme afin d'éviter là encore tout détournement de l'alarme voire même éviter une modification non-intentionnelle du numéro d'appel mémorisé.

## Revendications

1. Installation pour la transmission d'un signal d'alarme par voie téléphonique, entre un poste émetteur (100) et un poste récepteur (30), comprenant au niveau du poste émetteur:

a) des moyens (MF$_2$) de détection et de mise en forme d'un signal délivré par des moyens d'alarme (106, 107),

b) une unité centrale (110) sensible aux moyens de détection et de mise en forme et apte à commander,

c) un relais de prise de lignes (RPL) par l'intermédiaire,

d) d'un interface (AC$_1$) lors de l'émission d'un signal par les moyens d'alarme,

e) des moyens (160) de détection de tonalité reliés à l'unité centrale (110) et aptes à vérifier la tonalité, après bouclage de la ligne (20, 21), par le relais de prise de lignes, ces moyens de détection de tonalité étant couplés à la ligne téléphonique par l'intermédiaire,

f) de moyens d'isolation galvanique (T),

g) un relais de numérotation (RN) apte à composer un numéro d'appel correspondant au poste récepteur (30), par rupture impulsionnelle de la ligne, et commandé par l'unité centrale (110),

h) une mémoire adaptée pour enregistrer une information représentative du numéro d'appel du poste récepteur (30), et

i) un clavier (C) permettant d'introduire dans la mémoire l'information représentative du numéro d'appel,

j) des moyens d'affichage (120) visualisant le numéro d'appel introduit dans la mémoire, pour vérification,

k) des moyens d'émission (170) commandés par l'unité centrale (110) et couplés à la ligne téléphonique, par l'intermédiaire des moyens d'isolation galvanique (T), adaptés pour émettre en direction du poste récepteur (30) un signal représentatif d'une alarme,

l) des moyens de détection de sonnerie (MDS, MF$_1$), couplés à la ligne téléphonique et adaptés pour détecter un appel du poste émetteur, provenant de l'extérieur, caractérisée par le fait que:

– l'interface est formé d'un premier moyen amplificateur de courant (AC$_1$),

– le relais de numérotation (RN) est commandé par l'unité centrale par l'intermédiaire d'un second moyen amplificateur de courant (AC$_2$),

– des seconds moyens d'isolation galvanique relient les moyens de détection de sonnerie (MDS) à l'unité centrale et par le fait qu'elle comprend de plus:

m) des moyens de temporisaiton adaptés pour commander l'envoi d'une nouvelle émission du signal représentatif d'une alarme si le poste émetteur (100) n'a pas été rappelé une pluralité de fois, de l'extérieur, dans un délai déterminé suivant l'émission du signal antérieur représentatif d'une alarme.

2. Installation selon la revendication 1, caractérisée par le fait que les premiers moyens d'isolation galvanique comprennent un transformateur (T).

3. Installation selon l'une des revendications 1 et 2, caractérisée par le fait que les seconds moyens d'isolation galvanique comprennent un photocoupleur (CO) à semi-conducteurs.

4. Installation selon l'une des revendications 1 à 3, caractérisée par le fait que les moyens d'émission (170) comprennent au moins un générateur de signal de fréquence fixe, comprise dans la bande passante des voies téléphoniques.

5. Installation selon l'une des revendications 1 à 3, caractérisée par le fait que les moyens d'émission (170) comprennent des moyens d'enregistrement et de lecture d'un message vocal.

6. Installation selon l'une des revendications 1 à 3, caractérisée par le fait que les moyens d'émission (170) comprennent des moyens générateurs de message vocal par synthèse de paroles.

7. Installation selon l'une des revendications 1 à 3, caractérisée par le fait que les moyens d'émission (170) comprennent un microphone de surveillance disposé au niveau de la zone à surveiller.

8. Installation selon l'une des revendications 1 à 7, caractérisée par le fait que la mémoire (110) est adaptée pour enregistrer les informations représentatives de plusieurs numéros d'appel de postes récepteurs (30), et par le fait que l'unité centrale (110) est adaptée pour appeler successivement ces numéros, jusqu'à ce que les moyens de temporisation détectent un appel du poste émetteur (100) provenant de l'extérieur, dans ledit délai déterminé.

9. Installation selon l'une des revendications 1 à 8, caractérisée par le fait que le relais de prise de lignes (RPL) est adapté pour coupler à une voie téléphonique (20, 21), en fonction de son état, soit un poste téléphonique local (10), soit le poste émetteur d'alarme (100) et par le fait que ce dernier comporte également des moyens d'actionnement aptes à commander le relais de numérotation (RN) pour composer les numéros d'appel d'un poste récepteur (30) et coupler ultérieurement le poste récepteur (30) et le poste local (10) sans émettre de signal représentatif de l'alarme.

10. Installation selon l'une des revendications 1 à 9, caractérisée par le fait que le poste émetteur d'alarme (100) comprend en outre une porte OU possédant trois entrées reliées respectivement au clavier (C), aux moyens de détection et de mise en forme (MF$_2$) et aux moyens de détection de sonnerie (MDS, MF$_1$), la sortie de la porte OU étant connectée à une entrée (119) de réactivation de l'unité centrale normalement au repos.

11. Installation selon l'une des revendications 1 à 10, caractérisée par le fait que le poste récepteur (30) comprend des moyens (40) aptes à composer automatiquement un numéro d'appel correspondant au poste émetteur (100) d'alarme, et à émettre un signal d'acquit représentatif de la prise en compte du signal d'alarme.

12. Installation selon la revendication 11, caractérisée par le fait que le poste récepteur (30) comprend en outre des moyens générateurs de signaux aptes à actionner des moyens de commutation prévus au niveau du poste émetteur (100) pour assurer la mise sous tension ou hors tension de ce dernier.

13. Installation selon l'une des revendications 1 à 12, caractérisée par le fait que le poste émetteur (100) comprend une mémoire apte à contenir un code confidentiel qui doit être composé avant une modification d'un numéro d'appel mémorisé.

**Patentansprüche**

1. Einrichtung zur Übertragung eines Warnsignals über Telefonkanäle zwischen einer Sendestation (100) und einer Empfangsstation (30), die an der Sendestation folgendes umfasst:

a) eine Einrichtung (MF$_2$) zur Erfassung und Aufbereitung eines von einer Warneinrichtung (106, 107) abgegebenen Signals,

b) eine Zentraleinheit (110), die auf die Erfassungs- und Aufbereitungs-Einrichtung anspricht und in der Lage ist,

c) ein Anrufrelais (RPL) über

d) eine Schnittstelle (AC$_1$) zu betätigen, wenn ein Signal von der Warneinrichtung ausgesandt wird,

e) eine Einrichtung (160) zur Erfassung von akustischen Zeichen, die mit der Zentraleinheit (110) verbunden ist und nach dem Ankoppeln der Leitung (20, 21) durch das Anrufrelais die akustischen Zeichen zu überprüfen vermag, und die an die Telefonleitung über

f) eine Einrichtung (T) zur galvanischen Trennung angeschlossen ist,

g) ein Nummernwählrelais (RN), das eine der Empfangsstation (30) entsprechende Rufnummer durch impulsweises Unterbrechen der Leitung zu wählen vermag und von der Zentraleinheit (110) betätigt wird,

h) einen Speicher zum Speichern einer für die Rufnummer der Empfangsstation (30) repräsentativen Information, und

i) eine Tastatur (C) zum Eingeben der für die Rufnummer repräsentativen Information in den Speicher,

j) eine Anzeigeeinrichtung (120), welche die in den Speicher eingeschriebene Rufnummer zur Überprüfung darstellt,

k) eine Sendeeinrichtung (170), die von der Zentraleinheit (110) betätigt wird und an die Telefonleitung über die Einrichtung zur galvanischen Trennung (T) angeschlossen ist und ein Alarmsignal in Richtung der Empfangsstation (30) auszusenden vermag,

l) eine an die Telefonleitung angeschlossene Einrichtung zur Weckerüberwachung (MDS, MF$_1$), die einen von aussen zur Sendestation kommenden Ruf zu erfassen vermag,
dadurch gekennzeichnet, dass

- die Schnittstelle von einer ersten Stromverstärkereinrichtung (AC$_1$) gebildet ist,
- das Nummernwählrelais (RN) von der Zentraleinheit über eine zweite Stromverstärkereinrichtung (AC$_2$) betätigt wird,
- eine zweite Einrichtung zur galvanischen Trennung die Einrichtung zur Weckerüberwachung (MDS) mit der Zentraleinheit verbindet, und dass sie ferner
m) eine Verzögerungseinrichtung umfasst, welche in der Lage ist, die Auslösung einer erneuten Aussendung des Alarmsignals zu befehlen, wenn die Sendestation (100) nicht innerhalb einer Frist, die entsprechend der Aussendung des vorhergehenden Alarmsignals bestimmt wird, mehrmals von aussen zurückgerufen worden ist.

2. Einrichtung nach Anspruch 1, dadurch gekennzeichnet, dass die erste Einrichtung zur galvanischen Trennung einen Transformator (T) umfasst.

3. Einrichtung nach Anspruch 1 oder 2, dadurch gekennzeichnet, dass die zweite Einrichtung zur galvanischen Trennung einen Halbleiter-Fotokoppler (CO) umfasst.

4. Einrichtung nach einem der Ansprüche 1 bis 3, dadurch gekennzeichnet, dass die Sendeeinrichtung (170) wenigstens einen im Durchlassband der Telefonkanäle arbeitenden Festfrequenzsignalgenerator umfasst.

5. Einrichtung nach einem der Ansprüche 1 bis 3, dadurch gekennzeichnet, dass die Sendeeinrichtung (170) eine Einrichtung zum Aufzeichnen und Lesen einer Sprachnachricht umfasst.

6. Einrichtung nach einem der Ansprüche 1 bis 3, dadurch gekennzeichnet, dass die Sendeeinrichtung (170) eine Einrichtung zum Erzeugen einer Sprachnachricht durch Sprachsynthese umfasst.

7. Einrichtung nach einem der Ansprüche 1 bis 3, dadurch gekennzeichnet, dass die Sendeeinrichtung (170) ein im zu überwachenden Bereich angeordnetes Überwachungsmikrofon umfasst.

8. Einrichtung nach einem der Ansprüche 1 bis 7, dadurch gekennzeichnet, dass
- der Speicher (110) die mehrere Rufnummern von Empfangsstationen (30) anzeigenden Informationen zu speichern vermag, und
- die Zentraleinheit (110) diese Nummern nacheinander anzurufen vermag, bis die Verzögerungseinrichtung innerhalb der genannten festgelegten Frist einen von aussen zur Sendestation (100) kommenden Ruf erfasst.

9. Einrichtung nach einem der Ansprüche 1 bis 8, dadurch gekennzeichnet, dass
- das Anrufrelais (RPL) entsprechend seinem Betriebszustand entweder eine lokale Fernsprechstelle (10) oder die Warnsendestation (100) mit einem Telefonkanal (20, 21) zu verbinden vermag, und
- die Warnsendestation (100) auch eine Betätigungseinrichtung umfasst, die das Nummernwählrelais (RN) zum Wählen der Rufnummern einer Empfangsstation (30) zu betätigen und später die Empfangsstation (30) und die lokale Fernsprechstelle (10) miteinander zu verbinden vermag, ohne dass ein Alarmsignal ausgesendet wird.

10. Einrichtung nach einem der Ansprüche 1 bis 9, dadurch gekennzeichnet, dass die Warnsendestation (100) ausserdem ein ODER-Glied mit drei Eingängen umfasst, die an die Tastatur (C), an die Erfassungs- und Aufbereitungseinrichtung (MF$_2$) bzw. an die Einrichtung zur Weckerüberwachung (MDS, MF$_1$) angeschlossen sind, wobei der Ausgang des ODER-Gliedes mit einem Eingang (119) für die Wiedereinschaltung der normalerweise im Ruhezustand befindlichen Zentraleinheit verbunden ist.

11. Einrichtung nach einem der Ansprüche 1 bis 10, dadurch gekennzeichnet, dass die Empfangsstation (30) eine Einrichtung (40) umfasst, die eine der Warnsendestation (100) entsprechende Rufnummer automatisch zu wählen und ein den Empfang des Warnsignals anzeigendes Quittungssignal auszusenden vermag.

12. Einrichtung nach Anspruch 11, dadurch gekennzeichnet, dass die Empfangsstation (30) ausserdem eine Signalerzeugereinrichtung umfasst, die im Bereich der Sendestation (100) vorgesehene Umschalteinrichtungen zum Ein- und Ausschalten der Sendestation zu betätigen vermag.

13. Einrichtung nach einem der Ansprüche 1 bis 12, dadurch gekennzeichnet, dass die Sendestation (100) einen Speicher umfasst, in dem ein Geheimcode gespeichert werden kann, welcher vor Änderung einer gespeicherten Rufnummer gewählt werden muss.

**Claims**

1. Installation for the transmission of an alarm signal by a telephone channel, between an emitter set (100) and a receiver set (30), comprising at the emitter set:
a) means (MF$_2$) for detecting and shaping a signal delivered by alarm means (106, 107)
b) a central unit (110) sensitive to the detecting and shaping means and adapted to control
c) a line taking relay (RPL) via
d) an interface (AC$_1$), upon the emission of a signal by the alarm means,
e) tone detecting means (160) connected to the central unit (110) and adapted to check the tone, after looping of line (20, 21) by the line taking relay, these tone detecting means being coupled to the telephone line via
f) galvanic insulation means (T),
g) a dialling relay (RN) adapted to dial a call number corresponding to the receiver set (30), by impulse break fo the line, and controlled by the central unit (110)

7. Installation according to one of Claims 1 to dicative of the call number of the receiver set (30) and

i) a keyboard (C) for introducing into the memory the information indicative of the call number,

j) display means (120) displaying the call number introduced into the memory, for verification,

k) emitting means (170) controlled by the central unit (110) and coupled to the telephone line, via the galvanic insulation means (T), adapted to emit towards the receiver set (30) a signal indicative of an alarm,

l) ringing detection means (MDS, MF$_1$), coupled to the telephone line and adapted to detect a call of the emitter set, coming from outside, characterized that:

— the interface is composed of first current amplifier means (AC$_1$)

— the dialing relay (RN) is controlled by the central unit via a second current amplifier means (AC$_2$),

— second galvanic insulation means connect the ringing detection means (MDS) to the central unit, and that said installation further comprises:

m) timing means adapted to control the sending of a new emission of the signal indicative of an alarm, if the emitter set (100) has not been called back several times from the outside, in a determined period following the emission of the prior signal indicative of an alarm.

2. Installation according to Claim 1, characterized in that the first galvanic insulating means comprise a transformer (T).

3. Installation according to one of Claims 1 and 2, characterized in that the second galvanic insulating means comprise a semi-conductor photocoupler (CO).

4. Installation according to one of Claims 1 to 3, characterized in that the emitting means (170) comprises at least one generator of a fixed frequency signal included within the pass band of the telephone channels.

5. Installation according to one of Claims 1 to 3, characterized in that the emitter means (170) comprise means for recording and reading a vocal message.

6. Installation according to one of Claims 1 to 3, characterized in that the emitter means (170) comprise means generating a vocal message by speech synthesis.

h) a memory adapted to record information in-3, characterized in that the emitter means (170) comprise a monitoring microphone disposed in the zone to be monitored.

8. Installation according to one of Claims 1 to 7, characterized in that the memory (110) is adapted to record the information indicative of several call numbers of receiver sets (30), and in that the central unit (110) is adapted to call these numbers successively until the timing means detect a call of the emitter set (100) coming from outside, within said determined period.

9. Installation according to one of claims 1 to 8, characterized in that the line taking relay (RPL) is adapted to couple to a telephone channel (20, 21), as a function of its state, either a local telephone set (10) or the alarm emitter set (100) and in that the latter also comprises actuating means adapted to control the dialling relay (RN) to compose the call numbers of a receiver set (30) and subsequently to couple the receiver set (30) and the local set (10) without emitting a signal indicative of the alarm.

10. Installation according to one of Claims 1 to 9, characterized in that the alarm emitter set (100) further comprises an OR gate possessing three inputs respectively connected to the keyboard (C), to the detecting and shaping means (MF$_2$) and to the ringing detection means (MDS, MF$_1$), the output of the OR gate being connected to an input (119) for reactivation of the central unit normally at rest.

11. Installation according to one of Claims 1 to 10, characterized in that the receiver set (30) comprises means (40) adapted to dial automatically a call number corresponding to the alarm emitter set (100), and to emit an acquittance signal indicative of the taking into account of the alarm signal.

12. Installation according to Claim 11, characterized in that the receiver set (30) further comprises means for generating signals adapted to actuate switching means provided at the emitter set (100) to ensure switching on or off of the latter.

13. Installation according to one of claims 1 to 12, characterized in that the emitter set (100) comprises a memory adapted to store a confidential code which must be dialled before any alteration of a memorised call number.

FIG_1

```
┌─────────────────────────────┐
│      MISE  EN  MARCHE       │── 200
│   DE L'EMETTEUR   100       │
└─────────────────────────────┘
              │
┌─────────────────────────────┐
│   INTRODUCTION  DU OU DES   │── 201
│   NUMEROS D'APPEL DANS LA   │
│          MEMOIRE            │
└─────────────────────────────┘
              │
┌─────────────────────────────┐
│   DETECTION D'UN EVENEMENT  │── 202
│   PAR  LES  MOYENS D'ALARME │
└─────────────────────────────┘
              │
┌─────────────────────────────┐
│   COMMANDE  DU  RELAIS DE   │── 203
│   PRISE  DE  LIGNE   RPL    │
└─────────────────────────────┘
```

non / oui — T>Tc  209

TEMPORISATION  205

◇ TONALITE CORRECTE  204  NON

TEMPORISATION

OUI

```
┌─────────────────────────────┐
│   COMMANDE  DU  RELAIS      │── 206
│   DE  NUMEROTATION          │
└─────────────────────────────┘
              │
┌─────────────────────────────┐
│   ENVOI D'UN  SIGNAL        │── 207
│        D'ALARME             │
└─────────────────────────────┘
```

NON — ◇ RECEPTION D'UN SIGNAL D'ACQUIT DANS LE DELAI PRESCRIT  208

OUI

## FIG_2

FIG.3

- MISE EN MARCHE DE L'EMETTEUR 100 — 200
- INTRODUCTION DU OU DES NUMEROS D'APPEL DANS LA MEMOIRE — 201
- DETECTION D'UN EVENEMENT PAR LES MOYENS D'ALARME — 202
- COMMANDE DU RELAIS DE PRISE DE LIGNE R PL — 203A
- TEMPO-RISATION — 205A
- TONALITE CORRECTE — 204A — NON
- OUI
- COMMANDE DU RELAIS DE NUMEROTATION APPEL 1er N° — 206A
- ENVOI D'UN SIGNAL D'ALARME — 207A
- RECEPTION D'UN SIGNAL D'ACQUIT DANS LE DELAI PRESCRIT — 208A — NON
- OUI
- T > Tc — non / OUI
- TEMPORI-SATION — 209B
- TEMPO-RISATION — 205B — NON
- COMMANDE DU RELAIS DE PRISE DE LIGNE R PL — 203B
- TONALITE CORRECTE — 204B — NON
- OUI
- COMMANDE DU RELAIS DE NUMEROTATION APPEL 2d N° — 206B
- ENVOI D'UN SIGNAL D'ALARME — 207B
- RECEPTION D'UN SIGNAL D'ACQUIT DANS LE DELAI PRESCRIT — 208B — NON
- OUI
- T > Tc — non / OUI
- TEMPORI-SATION — 209A